# EUROPEAN PATENT APPLICATION

(11) **EP 1 333 599 A2**
(43) Date of publication of application: **06.08.2003**
(21) Application number: 03002374.1
(22) Date of filing: 04.02.2003
(51) Int. Cl.: H04B 7/26

(54) **Method for information transfer**

(30) Priority: 05.02.2002 IT MI20020206
(71) Applicant: PROD-EL S.p.A., 20132 Milano (IT)
(72) Inventor: Zani, Nicola, 25075 NAVE (BS) (IT); Carelli, Alessandro, 20127 Milano (IT); Garue, Elena, 20144 Milano (IT)
(74) Representative: Cioni, Carlo

(57) **Abstract**

Method of mapping voice or data logical units onto the time units called timeslots and frames belonging to a single physical channel comprising, according to the information transfer and good channel utilization, the following steps:
e. choose the dimension of the voice or data logical units to be constituted by a suitable integer number N of timeslot, being N greater than one and less than or equal to the total number of timeslots in a frame;
f. apply an Error Control Code onto the N adjacent timeslots, thereby obtaining a message;
g. apply an interleaving scheme between messages, thereby obtaining a Payload Logical Unit (PLU);
h. map the PLUs onto frames.

## Description

### Technical field

This invention relates to the field of digital transmission of information by means of radio channels. The technique hereby explained can be conveniently employed in professional mobile radios, in order to make best use of the radio resource and to enhance system performances on fading channels. The invention is applicable to, but not limited to, conventional radio systems.

### Background of the invention

Professional (or private) mobile radio (PMR) systems are systems set up by companies to provide mobile radio services to limited groups of users. There are a wide variety of PMR users: emergency services, national government agencies, local police, fire brigades, taxis and railways, etc. Typical radio channels available for PMR systems have a bandwidth of 12.5 kHz or 25 kHz in the VHF and UHF frequency ranges. Today the most widely used PMR systems are analogue; a major analogue standard is MPT1327 (Ministry of Post and Telecommunications), which was originally developed in the UK in 1980's. MPT1327 and other similar systems offer voice call features and basic data capabilities.

The growing demand for secure digitised voice communications and more complex but still flexible data services (free text or status messages, data base queries, polling messages, fixed images transmission) has lead - and is currently leading - to the development of many new digital protocols for the PMR industry. TETRA (TErrestrial Trunked RAdio), TETRAPOL, iDEN (Integrated Digital Enhanced Network) and APCO P25 (Association of Public-safety Communication Officers) are the state-of-the-art digital PMR systems. ETSI (European Telecommunications Standards Institute) is also currently developing a new system called DIIS (Digital Interchange of Information and Signalling). The coexistence of many such different systems comes from the heterogeneous needs and budgets of PMR customers.

A major difference in PMR solutions is between "trunked" and "non-trunked" (i.e. "conventional") systems. In non-trunked systems, channel allocation is straightforward, since only a single channel is available; if the channel is not free, the transmission must be delayed or aborted. Non-trunked systems are generally considered the proper solution for small companies with low traffic and few terminals. Conversely, trunked systems require a pool of channels shared by multiple users according to a TDMA (Time Division Multiple Access), FDMA (Frequency Division Multiple Access) or CDMA (Code Division Multiple Access) technique.

Complex network management and high installation costs make these systems feasible only for companies with high traffic and many terminals.

The following invention deals with a procedure providing an efficient use of the radio channel for digital transmission of data for conventional systems. In such systems a single radio channel must convey digitised voice, signalling information and data, therefore complex channel management strategy is required.

### Description of the invention

In a conventional PMR system, a regular timing structure on the radio channel is highly recommendable. A periodic time pattern facilitates the synchronisation of the receiver and makes bi-directional signalling more effective. This allows fast late-entry capabilities, call pre-emption and power control.

The basic elements of a regular time structure are generally the following:
timeslot: the smallest unit of time regularly repeated and holding a fixed number of information symbols.
frame: a structure composed by a certain number of adjacent timeslots

A typical choice of timeslot and frame duration is based upon system requirements, such as digitized voice frames, which is around 20-30 milliseconds for contemporary narrow-band communications.

A standard practice in data protocol design is the arrangement of information flow in logical basic units, each bearing a particular message. The aggregation of logical units of the same kind forms a "logical channel". Logical channels provide a conduit through which specific types of information are passed, i.e. signalling, digitized voice and data. Signalling logical units are regularly inserted in the voice and data logical channels. These logical channels are mapped onto particular slots in the regular time structure of the physical channel. This mapping must take into account the features of the mobile communication typical environment, which is affected by a number of severe disturbances, such as multipath fading, man-made and thermal noise, co-channel and inter-channel interference and so on. The major drawback in mobile radio communications is multipath fading, which in narrow-band communications causes fast carrier envelope fluctuations for moving terminals. When the envelope falls below a sensitivity threshold, a burst of errors occurs. Fading effects can be reduced if Error Control Coding (ECC) is used in conjunction with an interleaving technique. Interleaving is used to randomise burst-like errors, whereas ECC is devoted to detect and possibly correct most of the transmission errors. Interleaving depth must be carefully designed to address the case of a channel with statistically independent errors; a generally accepted rule is that interleaving depth should be longer than maximum expected error burst duration. In the VHF band most error bursts exceed the typical duration of a timeslot (20-30 milliseconds).

Maximum channel access efficiency would be gained if a straightforward one-to-one correspondence between logical units and timeslots were used; notwithstanding, from the above discussion it is apparent that this strategy is not effective in maximizing system performance.

The invention refers to a method of mapping voice or data logical units onto the time units called timeslots and frames belonging to a single physical channel; the scheme proposed hereafter allows both reliable information transfer and good channel utilization.

According to the information transfer and good channel utilization, the method proposed hereafter comprises the following steps:
choose the dimension of the voice or data logical units to be constituted by a suitable integer number N of timeslot, being N greater than one and less than or equal to the total number of timeslots in a frame;
apply an Error Control Code onto the N adjacent timeslots, thereby obtaining a message;
apply an interleaving scheme between messages, thereby obtaining a Payload Logical Unit (PLU);
map the PLUs onto frames.

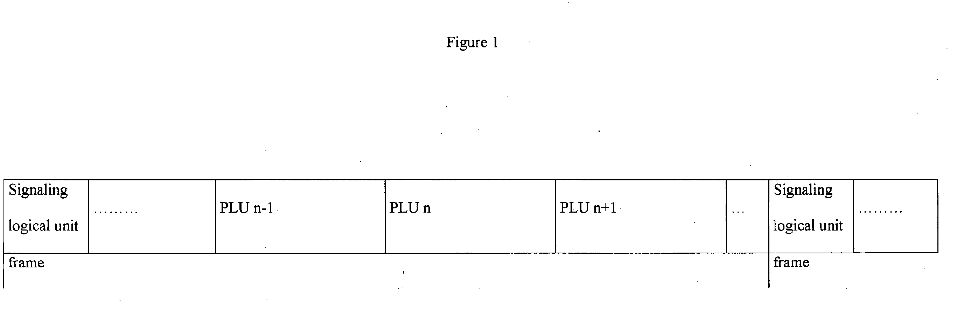

The method will be better understood by means of the drawing of figure 1.

The invention is better explained in the following detailed description, which shall not be intended as limitative of the field of application.

In a typical narrow-band digital system the main time structure - called a "superframe" - could be composed of four frames, each consisting of a group of two signalling timeslots followed by a further group of sixteen timeslots. The four groups of sixteen timeslots can be used either for digitised voice transmission or for data transmission.

According to the described procedure, the number of binary digits in a voice or data logical unit shall be designed in order to be mapped onto a convenient number of timeslots after ECC is applied. A suitable number of timeslots is four.

ECC could be performed by means of a Reed - Solomon block code, which is known to offer superior performances especially for long blocks of information symbols. Afterwards, interleaving shall be applied to several consecutive coded logical units. For example, in the interleaving procedure Reed - Solomon code symbols could be interchanged between two coded logical units for efficient operation of the coder. The result of the final operation in this example returns a block eight timeslots long, which in the following paragraphs we will call a "half-frame".

Two half-frames could be mapped onto a single frame.

This scheme has been shown to offer a most reliable information transfer, even under poor channel conditions resulting from long signal fades in the VHF - UHF bands. The half-frame format also allows insertion of a breakpoint into the frame structure, offering a supplementary channel access opportunity.

A second embodiment could result from applying the above procedure to derive a format on a quarter-frame basis. Minor performance degradation is expected, but the number of channel access points increases.

A similar structure could be applied to the DIIS protocol (Digital Interchange of Information and Signalling), in the course of development by ETSI.

## Claims

1. Method of mapping voice or data logical units onto the time units called timeslots and frames belonging to a single physical channel comprising, according to the information transfer and good channel utilization, the following steps:
a. choose the dimension of the voice or data logical units to be constituted by a suitable integer number N of timeslot, being N greater than one and less than or equal to the total number of timeslots in a frame;
b. apply an Error Control Code onto the N adjacent timeslots, thereby obtaining a message;
c. apply an interleaving scheme between messages, thereby obtaining a Payload Logical Unit (PLU);
d. map the PLUs onto frames.
